# EUROPÄISCHE PATENTSCHRIFT

(11) **EP 1 415 860 B1**
(45) Veröffentlichungstag und Bekanntmachung des Hinweises auf die Patenterteilung: **09.06.2010**
(21) Anmeldenummer: 03024762.1
(22) Anmeldetag: 29.10.2003
(51) Int. Cl.: B60R 13/00

(54) **Verfahren und Vorrichtung zum Aufbringen von einzelnen Dekorelementen auf entsprechende Zeichen**
Method and device for bringing individual decorating elements onto a supporting surface.
Méthode et appareil de pose d'éléments décoratifs distincts sur leur support

(30) Priorität: 30.10.2002 AT 16352002
(43) Veröffentlichungstag der Anmeldung: 06.05.2004
(73) Patentinhaber: Ulbrichts Witwe GmbH, 4690 Schwanenstadt (AT)
(72) Erfinder: Maringer, Josef, 4690 Schwanenstadt (AT); Imlinger, Franz, 4690 Schwanenstadt (AT)
(74) Vertreter: Torggler, Paul Norbert

(56) Entgegenhaltungen:
- DE-C- 19 605 430
- GB-A- 1 187 021
- US-A- 5 393 590
- US-A- 5 731 064
- US-A- 6 156 442
- PATENT ABSTRACTS OF JAPAN Bd. 012, Nr. 321 (M-736), 31. August 1988 (1988-08-31) & JP 63 089348 A (KANSAI TAKARA INSATSU KK; others: 03), 20. April 1988 (1988-04-20)

## Beschreibung

Die Erfindung betrifft ein Verfahren, eine Vorrichtung und ein Transferband zum Aufbringen von einzelnen Dekorelementen, insbesondere farbigen Klebebuchstaben, auf entsprechende Zeichen, insbesondere einer an Kraftfahrzeugen oder dergleichen anbringbaren Zusatzbezeichnung.

Derartige Zeichen, die in einem Schriftzug zusammengesetzt werden, sowie eine Vorrichtung für deren Montage am Kraftfahrzeug od. dgl. sind in der AT 2388 U beschrieben. Bei Zusatzbezeichnungen zum gewöhnlichen Namen der Kraftfahrzeuge, speziell der Kraftfahrzeugmotoren, beispielsweise TDI, HDI, usw. ist es üblich, zumindest einzelne Dekorelemente (Symbole, Ziffern oder Buchstaben) optisch auffällig zu gestalten.

Dokument JP-A-63089348 beschreibt ein Verfahren, eine Vorrichtung und ein Transferband zum Aufbringen von einzelnen Symbolen auf entsprechende Zeichen.

Diese Symbole, Ziffern oder Buchstaben können beispielsweise aus einem Kunststoff wie ABS hergestellt sein und eine metallisch wirkende Oberfläche aufweisen, an der farbliche Akzente gesetzt werden. So können an einem Schriftzug, beispielsweise TDI od. dgl. ein, zwei oder alle drei Buchstaben mit metallischem Aussehen eine farbige, insbesondere rote Oberflächeneinlage aufweisen. Der Buchstabe kann zu diesem Zweck einen geringfügig erhöhten Rand aufweisen, und die Oberflächeneinlage, die aus einer farbigen Folie hergestellte Dekorelemente umfasst, wird in die Vertiefung eingeklebt. Der erhöhte Rand stellt dabei eine optisch aufwertende Umrahmung und einen Schutz dar. Bisher wurde diese farbliche Gestaltung in einem sogenannten Tampondruckverfahren erzielt.

Die Erfindung hat es sich nun zur Aufgabe gestellt, ein Verfahren, eine Vorrichtung und ein Transferband zu schaffen, die eine farbliche Betonung von Zeichen in rationeller und einfacher Weise ermöglichen.

Erfindungsgemäß wird dies dadurch erreicht, dass ein mit den Dekorelementen versehenes Trägerband oberhalb des zu beklebenden Zeichens herangeführt wird, bis das aufzubringende Dekorelement mit dem zu beklebenden Zeichen fluchtet, dass das Dekorelement innerhalb eines Randes auf die Oberfläche des Zeichens gedrückt und das Trägerband vom aufgeklebten Dekorelement abgelöst wird, wobei das Zeichen durch das Trägerband hindurch am Rand erfasst und niedergehalten wird.

Eine hiefür geeignete Vorrichtung ist dadurch gekennzeichnet, dass oberhalb einer Führungsstrecke für ein mit den Dekorelementen versehenes Trägerband zumindest ein Anpressstempel vorgesehen ist, mittels dem ein Dekorelement innerhalb eines Randes auf die Oberfläche des Zeichens drückbar ist, dass neben jedem Anpressstempel ein dem Rand des zu beklebenden Zeichens zugeordneter Niederhalter angeordnet ist, und dass außerhalb des Anpressstempels und des Niederhalters Elemente zum Ablösen des Trägerbandes angeordnet sind.

Ein in dieses Verfahren einsetzbares Transferband umfasst ein Trägerband, eine auf dem Trägerband angeordnete erste Klebstoffschicht, mehrere auf der ersten Klebstoffschicht angeordnete Dekorelemente aus einer Kunststofffolie, eine auf der Kunststofffolie angeordnete zweite Klebstoffschicht, und ein beide Klebstoffschichten abdeckendes Schutzband, wobei das Trägerband zumindest eine Reihe von Transport- und/oder Rapportlöchern sowie pro Dekorelement zumindest eine Öffnung aufweist, die zumindest teilweise an einen Rand des Dekorelementes grenzt.

Ein derartiges Transferband ist mit gleichen Dekorelementen versehen, wenn in der Zusatzbezeichnung nur ein Symbol farblich hervorgehoben werden soll. Das Transferband kann zum Beispiel eine Reihe von l umfassen, wenn in einem Schriftzug, wie TDI, nur der letzte Buchstabe betont werden soll. Das Transferband umfasst Gruppen von Dekorelementen im richtigen Abstand, wenn an der Zusatzbezeichnung Symbolgruppen hervorgehoben werden sollen, und umfasst, sich wiederholend, alle Dekorelemente im richtigen Abstand, wenn der gesamte Schriftzug beklebt werden soll.

Da das Trägerband sich nach der Applikation der Dekorelemente leicht entfernen lassen soll, ist weiters bevorzugt vorgesehen, dass die Haftung der ersten Klebstoffschicht zur Kunststofffolie kleiner als die Haftung der zweiten Klebstoffschicht zur Oberfläche des Zeichens ist.

Wie einleitend angegeben, sind die Zeichen (Symbole, Ziffern oder Buchstaben) insbesondere aus Kunststoff spritzgegossen und im allgemeinen nur notdürftig über einen Angusssteg zusammengehalten. Durch den Durchgriff des Niederhalters auf den Rand des Zeichens beim Aufkleben des einzelnen Dekorelementes und beim Ablösen des Trägerbandes wird nicht nur der notwendige Halt des Zeichens, sondern zusätzlich auch die exakte Positionierung in besonders einfacher Weise erreicht.

Nachstehend wird nun die Erfindung anhand der Figuren der beiliegenden Zeichnung näher beschrieben, ohne darauf beschränkt zu sein. Es zeigen:
- Fig. 1: den mehrschichtigen Aufbau eines erfindungsgemäßen Transferbandes in Seitenansicht,
- Fig. 2: eine Draufsicht auf das Trägerband mit teilweise abgehobenem Schutzband, und
- Fig. 3 bis 5: schematische Seitenansichten einer Vorrichtung zum Aufbringen der einzelnen Dekorelemente auf die Zeichen in drei aufeinanderfolgenden Arbeitsschritten.

Ein Transferband weist ein Trägerband 1 auf, an dem nahe der beiden Ränder Transport- und/oder Rapportlöcher 10 angeordnet sind. Das Trägerband 1 ist mit einer ersten Klebstoffschicht 2 versehen, an der Dekorelemente 8 haften, die jeweils aus einer transparenten Kunststofffolie insbesondere Polyamidfolie 3, einer Farbschicht 4, einer opaken Grundschicht 5 und einer zweiten Klebstoffschicht 6 aufgebaut sind. Ein ablösbares Schutzband 7 wird vor der Verwendung des Transferbandes abgezogen.

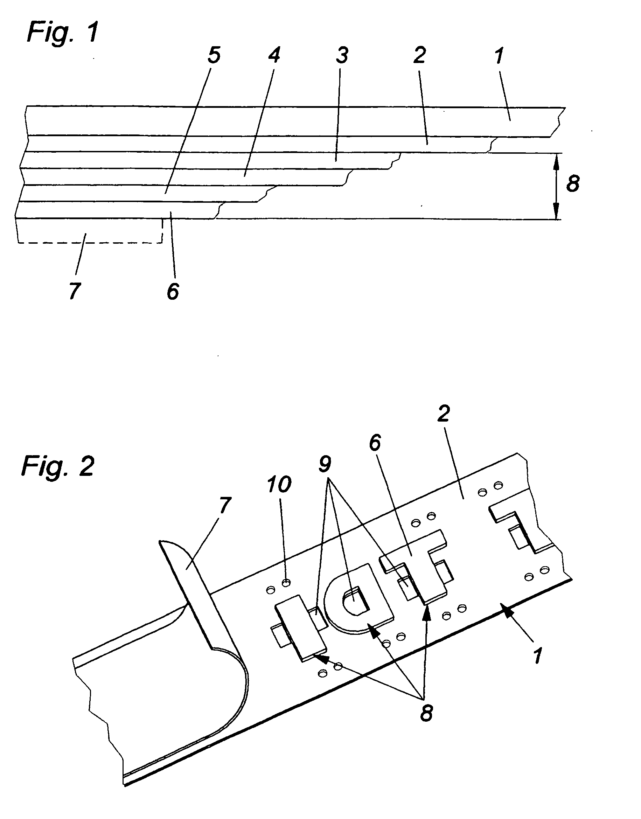

In Fig. 1 ist der Schichtaufbau schematisch gezeigt, wobei das Schutzband 7, das außerhalb der Klebstoffschicht 6 auch die Klebstoffschicht 2 abdeckt, nur strichliert gezeichnet ist. Bei der Herstellung des Transferbandes wird auf das Trägerband 1 die erste Klebstoffschicht 2 vollflächig aufgetragen, auf die ein durchgehender Streifen der transparenten Polyamidfolie 3 aufgeklebt wird. Die Polyamidfolie 3 wird anschließend mit der Farbschicht 4, beispielsweise rot, bedruckt. Um einen farbverändernden Durchschlag der Farbe des späteren Untergrundes zu vermeiden, wird anschließend eine opake Sperr- bzw. Grundschicht aufgebracht, die insbesondere weiß ist. Diese Vorgangsweise kann insoferne auch geändert sein, wenn die Polyamidfolie 3 vor dem Aufkleben auf das Trägerband bereits beschichtet oder eingefärbt ist.

Nunmehr werden mit einem Stanzwerkzeug die gewünschten Dekorelemente 8 oder Folgen von Dekorelementen bzw. Schriftzüge aus der Polyamidfolie 3 ausgestanzt, wobei die Schnitte nur bis zum Trägerband 1 reichen. Gleichzeitig oder anschließend werden mit einem zweiten Stanzwerkzeug, das auch das Trägerelement 1 durchschneidet, Öffnungen 9, die jeweils zumindest teilweise an den Rand eines Dekorelementes 8 grenzen, und Rapport- und/oder Transportlöcher 10 im Randbereich hergestellt. Von den in Fig. 2 gezeigten Buchstaben T, D und l sind dem T und dem l im Mitteilteil beidseitig je eine Öffnung 9 zugeordnet, während beim Buchstaben D eine einzige Öffnung 9 vorgesehen ist, die den Innenbereich umfasst. Anschließend wird die überschüssige Polyamidfolie 3 vom Trägerband 1 abgezogen. Die zweite Klebstoffschicht 6, die zur Aufbringung der Dekorelemente 8 auf eine nicht gezeigte Unterlage dient, kann daher vor der Ausstanzung der Folie oder auch nachher auf die opake Sperr- bzw. Grundschicht 5 aufgebracht werden.

Das auf diese Weise mit einzelnen Dekorelementen 8 bestückte Trägerband 1 wird mit dem Schutzband 7 abgedeckt und steht dann für die Verwendung zur farblichen Betonung entsprechender Zeichen der Zusatzbezeichnung eines Kraftfahrzeuges bzw. Kraftfahrzeugmotors zur Verfügung, die ihrerseits auf eine Abdeckung oder einen Karosserieteil aufgebracht werden.

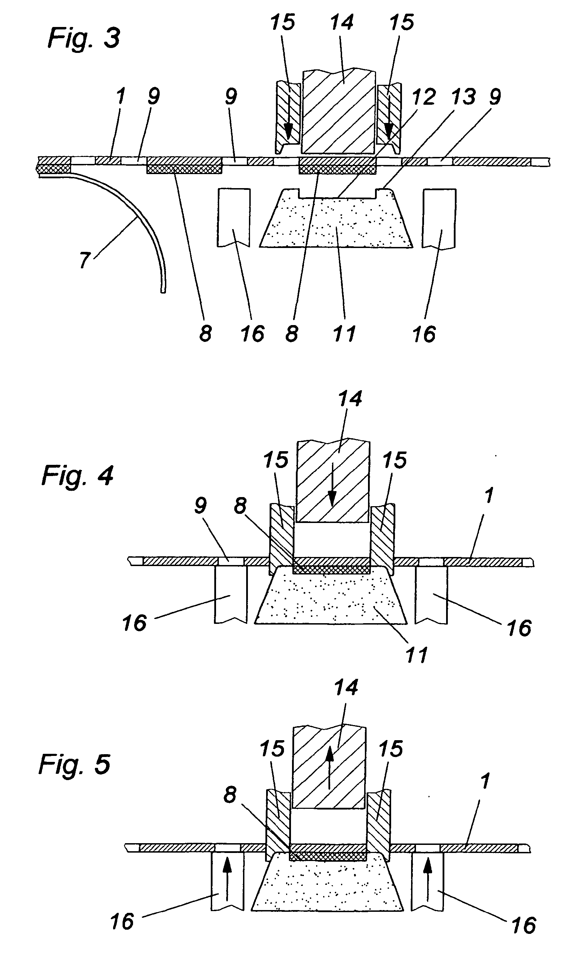

In der schematischen Darstellung der Fig. 3 bis 5 sind die wesentlichen Schritte des Transfers der einzelnen Dekorelemente 8 auf die Oberfläche 12 der Zeichen 11 gezeigt.

Am Eingang der Transferstation wird vom zugeführten Trägerband 1 das Schutzband 7 abgezogen, sodass die klebrige Unterseite der einzelnen Dekorelemente 8 frei liegt. Das Trägerband 1 wird weiterbewegt, bis das zu übertragende Dekorelement 8 oberhalb des zu beklebenden Zeichens 11 liegt. In dieser Position wird der Niederhalter 15 nach unten bewegt, und ergreift durch die Öffnungen 9 im Trägerband 1 hindurch den über die zu beklebende Oberfläche 12 hochstehenden Rand 13 des Zeichens 11, das dadurch in der richtigen Position zusätzlich fest- und niedergehalten ist (Fig. 4). Anschließend wird der Anpressstempel 14 nach unten bewegt, der das klebende Dekorelement 8 auf die vertiefte Oberfläche 12 des Zeichens 11 aufpresst. Der Anpressstempel wird anschließend wieder zurückgezogen (Fig. 5), sodass das Trägerband 11 mit Hilfe von Ablöseelementen 16 nach oben gehoben werden kann, wobei es sich vom aufgeklebten Dekorelement 8 löst.

Für die zweite Klebstoffschicht 6 wird ein Klebstoff gewählt, dessen Haftung zur Unterlage größer als die Haftung der ersten Klebstoffschicht 2 zur Polyamidfolie 3 ist.

Alternativ kann, wenn die Zeichen in ihrer Position ausreichend festgelegt sind, der Niederhalter 15 auch erst nach dem Aufkleben des Dekorelementes 8 abgesenkt werden, um den Rand 13 des beklebten Zeichens 11 nur während des Anhebens des Trägerbandes niederzuhalten.

## Patentansprüche

1. Verfahren zum Aufbringen von einzelnen Dekorelementen, insbesondere farbigen Klebebuchstaben, auf entsprechende Zeichen, insbesondere einer an Kraftfahrzeugen oder dergleichen anbringbaren Zusatzbezeichnung, wobei ein mit dem Dekorelement (8) versehenes Trägerband (1) oberhalb des zu beklebenden Zeichens (11) herangeführt wird, bis das aufzubringende Dekorelement (8) mit dem zu beklebenden Zeichen (11) fluchtet, **dadurch gekennzeichnet daß** das Dekorelement (8) innerhalb eines Randes (13) auf die Oberfläche (12) des Zeichens (11) gedrückt und das Trägerband (1) vom aufgeklebten Dekorelement (8) abgelöst wird, wobei das Zeichen (11) durch das Trägerband (1) hindurch am Rand (13) erfasst und niedergehalten wird.

2. Vorrichtung zum Aufbringen von einzelnen Dekorelementen, insbesondere farbigen Klebebuchstaben, auf entsprechende Zeichen, insbesondere einer an Kraftfahrzeugen oder dergleichen anbringbaren Zusatzbezeichnung, **dadurch gekennzeichnet, dass** oberhalb einer Führungsstrecke für ein mit den Dekorelementen (8) versehenes Trägerband (1) zumindest ein Anpressstempel (14) vorgesehen ist, mittels dem ein Dekorelement (8) innerhalb eines Randes (13) auf die Oberfläche (12) des Zeichens (11) drückbar ist, dass neben jedem Anpressstempel (14) ein dem Rand (13) des zu beklebenden Zeichens (11) zugeordneter Niederhalter (15) angeordnet ist, und dass außerhalb des Anpressstempels (14) und des Niederhalters (15) Elemente (16) zum Ablösen des Trägerbandes (1) angeordnet sind.

3. Transferband mit einzelnen Dekorelementen, insbesondere farbigen Klebebuchstaben zur Aufbringung auf entsprechende Zeichen, insbesondere einer an Kraftfahrzeugen oder dergleichen anbringbaren Zusatzbezeichnung, **gekennzeichnet durch** ein Trägerband (1), eine auf dem Trägerband (1) angeordnete erste Klebstoffschicht (2), mehrere auf der ersten Klebstoffschicht (2) angeordnete Dekorelemente (8) aus einer Kunststofffolie (3), eine auf der Kunststofffolie (3) angeordnete zweite Klebstoffschicht (6), und ein beide Klebstoffschichten (2, 6) abdeckendes Schutzband (7), wobei das Trägerband (1) zumindest eine Reihe von Transport- und/oder Rapportlöchern (10) sowie pro Dekorelement (8) zumindest eine Öffnung (9) aufweist, die zumindest teilweise an einen Rand des Dekorelementes (8) grenzt.

4. Transferband nach Anspruch 3, **dadurch gekennzeichnet, dass** die Haftung der ersten Klebstoffschicht (2) zur Kunststofffolie (3) kleiner als die Haftung der zweiten Klebstoffschicht (6) zur Oberfläche (12) des Zeichens (11) ist.

5. Transferband nach einem der Ansprüche 3 oder 4, **dadurch gekennzeichnet, dass** die Kunststofffolie (3) eine Polyamidfolie ist.

## Claims

1. A method of applying individual decorative elements, in particular coloured adhesive letters, to corresponding characters, in particular an additional identification which can be fitted to motor vehicles or the like, wherein a carrier strip (1) provided with the decorative element (8) is approached above the character (11), to be stuck on to until the decorative element (1) to be applied is aligned with the character (11) to be stuck on to, **characterised in that** the decorative element (8) is pressed within an edge (13) to the surface (12) of the character (11) and the carrier strip (1) is detached from the stuck-on decorative element (8), wherein the character (11) is engaged through the carrier strip (1) at the edge (13) and held down.

2. Apparatus for applying individual decorative elements, in particular coloured adhesive letters, to corresponding characters, in particular an additional identification which can be fitted to motor vehicles or the like, **characterised in that** provided above a guide section for a carrier strip (1) provided with the decorative elements (8) is at least one pressing die (14), by means of which a decorative element (8) can be pressed within an edge (13) on to the surface (12) of the character (11), that a hold-down device (15) associated with the edge (13) of the character (11) to be stuck on to is arranged beside each pressing die (14) and that elements (16) for detachment of the carrier strip (1) are arranged outside the pressing die (14) and the hold-down device (15).

3. A transfer strip having individual decorative elements, in particular coloured adhesive letters, for application to corresponding characters, in particular an additional identification which can be fitted to motor vehicles or the like, **characterised by** a carrier strip (1), a first adhesive layer (2) arranged on the carrier strip (1), a plurality of decorative elements (8) arranged on the first adhesive layer (2) and comprising a plastic film (3), a second adhesive layer (6) arranged on the plastic film (3) and a protective strip (7) covering both adhesive layers (2, 6), wherein the carrier strip (1) has at least one row of transport and/or register holes (10) and for each decorative element (8) at least one opening (9) which at least partially adjoins an edge of the decorative element (8).

4. A transfer strip according to claim 3 **characterised in that** the adhesion of the first adhesive layer (2) to the plastic film (3) is less than the adhesion of the second adhesive layer (6) to the surface (12) of the character (11).

5. A transfer strip according to one of claims 3 and 4 **characterised in that** the plastic film (3) is a polyamide film.

## Revendications

1. Procédé de fourniture d'éléments décoratifs individuels, en particulier de lettres adhésives colorées sur des signes correspondants, en particulier une désignation supplémentaire pouvant être montée sur des véhicules automobiles ou similaires, une bande support (1) pourvue de l'élément décoratif (8) étant amenée au-dessus du signe à coller (11) jusqu'à ce que l'élément décoratif (8) à appliquer s'aligne avec le signe à coller (11), **caractérisé en ce que** l'élément décoratif (8) est pressé dans un bord (13) sur la surface (12) du signe (11) et la bande support (1) est détachée de l'élément décoratif (8) collé, le signe (11) étant saisi et maintenu par la bande support (1) sur le bord (13).

2. Dispositif de fourniture d'éléments décoratifs individuels, en particulier de lettres adhésives colorées sur des signes correspondants, en particulier une désignation supplémentaire pouvant être montée sur des véhicules automobiles ou similaires, **caractérisé en ce qu'**au-dessus d'un parcours de guidage pour une bande support (1) pourvue d'éléments décoratifs (8) est prévu au moins un piston de presse (14), à l'aide duquel un élément décoratif (8) peut être pressé dans un bord (13) sur la surface (12) du signe (11), **en ce qu'**à côté de chaque piston de presse (14) est disposé un serre-flan (15) associé au bord (13) du signe à coller (11), et **en ce qu'**en dehors du piston de presse (14) et du serre-flan (15) sont disposés des éléments (16) pour détacher la bande support (1).

3. Bande de transfert avec des éléments décoratifs individuels, en particulier des lettres adhésives colorées pour la fourniture de signes correspondants, en particulier une désignation supplémentaire pouvant être montée sur des véhicules automobiles ou similaires, **caractérisée par** une bande support (1), une première couche de colle (2) disposée sur la bande support (1), plusieurs éléments décoratifs (8) disposés sur la première couche de colle (2) en un film plastique (3), une seconde couche de colle (6) disposée sur le film plastique (3), et une bande protectrice (7) recouvrant les deux couches de colle (2, 6), la bande support (1) présentant au moins une rangée de trous de transport et/ou de rapport (10) ainsi que par élément décoratif (8) au moins une ouverture (9) qui est contiguë au moins en partie à un bord de l'élément décoratif (8).

4. Bande de transfert selon la revendication 3, **caractérisée en ce que** l'adhérence de la première couche de colle (2) au film plastique (3) est plus faible que l'adhérence de la seconde couche de colle (6) à la surface (12) du repère (11).

5. Bande de transfert selon l'une quelconque des revendications 3 ou 4, **caractérisée en ce que** le film plastique (3) est un film de polyamide.
